# EUROPÄISCHE PATENTSCHRIFT

(11) **EP 2 317 235 B1**
(45) Veröffentlichungstag und Bekanntmachung des Hinweises auf die Patenterteilung: **11.12.2013**
(21) Anmeldenummer: 10013972.4
(22) Anmeldetag: 26.10.2010
(51) Int. Cl.: F24F 7/08, F24F 11/00

(54) **Verfahren und Sicherheitseinrichtung zur Kontrolle des Luftdrucks in einem Raum mit einer Feuerstätte**
Method and safety device for controlling the air pressure in a room with a fireplace
Procédé et dispositif de sécurité destinés au contrôle de la pression pneumatique dans une pièce dotée d'un foyer

(30) Priorität: 27.10.2009 DE 202009014523 U
(43) Veröffentlichungstag der Anmeldung: 04.05.2011
(73) Patentinhaber: Dimplex Lüftungssysteme Zweigniederlassung der Applied Energy Products Limited, 78586 Dürbheim (DE)
(72) Erfinder: Hauser, Rudi, 78549 Spaichingen (DE); Buntz, Jürgen, 78351 Bodman-Lugwigshafen (DE)
(74) Vertreter: FDST Patentanwälte

(56) Entgegenhaltungen:
- EP-B1- 1 626 426
- DE-A1- 19 654 955
- JP-A- 60 062 540
- US-A1- 2008 250 800

## Beschreibung

Die Erfindung betrifft ein Verfahren sowie eine Steuereinrichtung zur Kontrolle des Luftdrucks in einem Raum mit einer insbesondere raumluftabhängigen Feuerstätte mit den Merkmalen des Oberbegriffs des Anspruchs 1 sowie des Anspruchs 14.

Aus der DE 196 54 955 ist eine Klimatisierungsvorrichtung zu entnehmen, bei der die Temperatur in mindestens einem Raum durch Belüftung mit beheizter oder gekühlter Luft auf einen vorgegebenen Temperatursollwert geregelt wird. In einem Zuluftkanal ist eine Kühl- und/oder Heizungsvorrichtung zur Kühlung oder Erwärmung der Zuluft angeordnet. Weiterhin ist ein Abluftmotor angeordnet, der die Abluft über einen Abluftkanal aus dem zu klimatisierenden Raum saugt. Der Sollwert für den Regler des Abluftmotors bildet dabei einen gegenüber dem Außendruck festgelegten Raumüberdruck.

Bei Einrichtungen zur Be- und Entlüftung eines Raums mit einer raumluftabhängigen Feuerstätte, insbesondere im Wohnbereich, müssen Sicherheitsmaßnahmen ergriffen werden, so dass in dem Raum kein Unterdruck entstehen kann. Dadurch wird vermieden, dass bei der Verbrennung in der Feuerstätte entstehende giftige Rauchgase anstatt durch einen Kamin abzuziehen, in die Raumluft gelangen.

Zur Überwachung des Luftdrucks sind so genannte Luftdruckwächter bekannt, die über eine Differenzdruckmessung den im Raum herrschenden Luftdruck mit dem außerhalb des Gebäudes herrschenden Luftdruck vergleichen und bei Erfassung eines unzulässigen Unterdrucks im Raum Maßnahmen ergreifen, wie beispielsweise die Stromversorgung zu einem elektrischen Gerät, wie Entlüftungsanlage, Dunstabzugshaube, etc. unterbrechen. Ein derartiger Luftdruckwächter wird beispielsweise in der EP 1 626 426 B1 beschrieben. Diese bekannten Luftdruckwächter erfordern allerdings einen zusätzlichen Installations- und Geräteaufwand. Der Erfindung liegt die Aufgabe zugrunde, eine vereinfachte und zugleich effiziente und sichere Kontrolle und Überwachung des Luftdrucks in einem solchen Raum mit einer Feuerstätte anzugeben, wobei der Raum mit Hilfe einer Be- und Entlüftungsanlage belüftet wird.

Die Aufgabe wird gemäß der Erfindung gelöst mit den Merkmalen des Anspruchs 1 sowie des Anspruchs 14. Danach ist vorgesehen, die eigentliche Kontrolle und Überwachung in die Steuereinrichtung der Be- und Entlüftungsanlage zu integrieren, und zwar derart, dass die Steuereinrichtung die für die Be- und/oder Entlüftung zuständigen Ventilatoren derart ansteuert und zugleich überwacht, dass die Entstehung eines unzulässigen Unterdrucks im Raum vermieden ist, dass also sichergestellt ist, dass der dem Raum zugeführte Zuluftstrom größergleich dem abgeführten Abluftstrom ist. Um dies zu gewährleisten, ist in der Steuereinrichtung eine Überwachungseinheit implementiert, die anhand von Kenndaten der Ventilatoren diese auf eine Fehlfunktion überwacht, nämlich dahingehend, ob die von der Steuereinheit gewünschte und vorgegebene Luftstrommenge auf der Zuluft- sowie auf der Abluftseite tatsächlich auch eingehalten ist.

Bei Erkennen insbesondere einer nicht behebbaren Fehlfunktion ist vorgesehen, dass zumindest der abluftseitige Ventilator oder die gesamte Lüftungsanlage zwangsweise abgeschaltet wird. Dadurch wird sichergestellt, dass dem Raum nicht mehr Luft entzogen als zugeführt wird. Vorzugsweise ist ergänzend weiterhin vorgesehen, dass der abluftseitige Ventilator nur nach manuellem Zurücksetzen einer Sperre durch Wartungspersonal nach Wartung der Lüftungsanlage wieder in Betrieb genommen werden kann.

Ein Vorteil ist darin zu sehen, dass die Kontrolle und Überwachung vorzugsweise ausschließlich anhand der Betriebs- und Kenndaten der Ventilatoren erfolgt. Es sind daher keine zusätzlichen Messgeräte, wie Luftdruckwächter oder Differenzdruckmessungen zwischen dem im Raum herrschenden Druck und dem in der Umgebung herrschenden Druck erforderlich und auch nicht vorgesehen. Dadurch reduziert sich der Installationsaufwand und damit auch die Kosten.

Unter Fehlfunktion wird hierbei allgemein ein Zustand verstanden, bei dem die Steuereinrichtung bzw. die Überwachungseinheit erkennt, dass der zugeführte Luftstrom kleiner dem abgeführten Luftstrom ist. Hierfür können unterschiedliche Ursachen verantwortlich sein: Störungen in der Elektrik, die zu einem unkontrollierten Verhalten der Ventilatoren führen, Störungen in den Strömungskanälen für die Zu- und Abluft, die zu unterschiedlichen Strömungswiderständen führen, beispielsweise ein teilweises Zusetzen des Zuluftkanals, sowie Störungen bei den Ventilatoren selbst, wie beispielsweise ein gebrochenes Lüfterrad. Hierbei kann zwischen behebbaren und nicht behebbaren Fehlfunktionen unterschieden werden. Eine behebbare Fehlfunktion ist beispielsweise eine Zunahme des Strömungswiderstands im Zuluftkanal, da diese durch eine erhöhte Drehzahl des zuluftseitigen Ventilators wieder ausgeglichen werden kann bzw. durch eine Reduzierung der Drehzahl des abluftseitigen Ventilators.

Im Hinblick auf eine möglichst einfache Überwachung ist eine erste Überwachungsfunktion implementiert, die im Folgenden auch als modellbasierte Drucküberwachung (MDÜ) bezeichnet wird. Diese überwacht die Drehzahl der Ventilatoren und schließt aus der Drehzahl auf den jeweils geförderten Luftstrom zurück. Es wird daher anhand der Drehzahlen der Ventilatoren der Zuluftstrom mit dem Abluftstrom verglichen. Vorzugsweise ist die Ansteuerung der Ventilatoren insgesamt derart eingestellt, dass ein größerer Luftstrom zugeführt wird als er über den abluftseitigen Ventilator abgeführt wird. Die modellbasierte Drucküberwachung geht von einem vereinfachten Raumluft-Modell für eine grobe Abschätzung der Raumdruckverhältnisse und zur Überwachung der Ventilatoren aus. Insbesondere wird hierbei von dem Ansatz ausgegangen, dass die über den zuluftseitigen Ventilator zugeführte Luftmenge zumindest nicht kleiner sein darf als die über den abluftseitigen Ventilator abgeführte Luftmenge zuzüglich der durch Leckage entweichenden Luftmengen. Vorzugsweise ist zusätzlich eine Sicherheitsmarge vorgesehen, so dass die Steuereinrichtung bewusst derart eingestellt ist, dass eher ein Überdruck im Raum erzeugt wird. Weiterhin wird hierbei im Wesentlichen von der Überlegung ausgegangen, dass die von den Ventilatoren geförderte Luftmenge in erster Linie proportional zu der Drehzahl ist.

Im Hinblick auf den normalen Betrieb ist ausgehend von dem oben beschriebenen Raumluftmodell zweckdienlicherweise auch vorgesehen, dass der abluftseitige Ventilator in Abhängigkeit des zuluftseitigen Ventilators gesteuert wird, um zu gewährleisten, dass der zugeführte Luftstrom größergleich dem abgeführten ist. Wird aufgrund der erfassten Kenndaten des zuluftseitigen Ventilators ein Abfall von dessen Leistung (geringere Drehzahl, verringerter Zuluftstrom) erkannt, so wird entsprechend auch die Leistung des abluftseitigen Ventilators über die Steuereinrichtung verringert oder abgeschaltet. Unabhängig hiervon ist in der Steuereinrichtung bevorzugt eine Logik bzw. Konfigurationstabelle enthalten, die eine unzulässige Ansteuerung der beiden Ventilatoren verhindert, also Kombinationen von Ansteuerungen der beiden Ventilatoren ausschließt, die möglicherweise einen Unterdruck im Raum erzeugen.

Vorzugsweise in Kombination mit der ersten Überwachungsfunktion ist in zweckdienlicher Weiterbildung als zweite Überwachungsfunktion eine Luftwiderstandsüberwachung (LWÜ) vorgesehen, die überprüft, ob der Luftwiderstand, gegen den der Ventilator arbeiten muss, auffällige Abweichungen von dem erwarteten normalen Luftwiderstand zeigt. Ursachen sind hierfür beispielsweise Verstopfungen der Luftkanäle. Dies ist insbesondere auf der Zuluftseite kritisch, da in diesem Fall - bei gleicher Drehzahl - die geförderte Luftmenge abnimmt. Die Luftwiderstandsüberwachung registriert jedoch auch ein abnormales Absenken des Luftwiderstands. Dies tritt beispielsweise bei einem Bruch eines Flügels des Lüfterrads des Ventilators auf, so dass der Ventilator, also der Antriebsmotor des Ventilators, aufgrund des fehlenden Luftwiderstands eine deutlich geringere elektrische Leistungsaufnahme bei einer vorgegebenen Solldrehzahl zeigt.

Für diese Luftwiderstandsüberwachung werden vorzugsweise (ausschließlich) Kenndaten der Ventilatoren ausgewertet. Auch hier sind daher keine tatsächlichen Strömungsmessgeräte etc. vorgesehen. Insbesondere wird zur Bestimmung des Luftwiderstands die Drehzahl des jeweiligen Ventilators und - je nach Ventilatortyp - ergänzend dessen Leistungsaufnahme herangezogen. Generell ist im Normalbetrieb, also bei einem normalen Luftwiderstand und einer vorgegebenen Drehzahl, mit einer bestimmten Leistungsaufnahme des Elektromotors zu rechnen. Weicht diese Leistungsaufnahme von dem erwarteten Wert ab, so wird dies als eine Erhöhung/Erniedrigung des Luftwiderstandswerts bewertet und im Hinblick auf das Vorliegen einer eventuellen Fehlfunktion ausgewertet.

Bei einem volumenstromgeregelten Ventilator führt eine derartige Änderung des Luftwiderstands zu einer Anpassung der Drehzahl. Ein ungeregelter Lüfter wird - aufgrund der veränderten Luftdruckwiderstände - zumindest eine veränderte Leistungsaufnahme zeigen, d.h. bei konstanter Spannungsversorgung ( vorgegebene Steuerspannung der Steuereinrichtung) wird der Motorstrom des Lüftermotors variieren.

Mit diesem Konzept der LWÜ werden daher zuverlässig beispielsweise auch Montagefehler bei der Luftzuführung (versehentliches Verschließen eines Luftkanals) sicher erfasst.

Im Unterschied zu der MDÜ werden daher bei der LWÜ lediglich jeweils die Kenndaten (Leistungsaufnahme plus Drehzahl) eines einzelnen Ventilators ausgewertet, während bei der MDÜ ein Vergleich der Kenndaten (Vergleich der Drehzahlen) der beiden Ventilatoren erfolgt. Mit der MDÜ lassen sich auch Einstellfehler durch den Monteur vermeiden.

In bevorzugter Ausgestaltung werden als Ventilatoren volumenstromgeregelte Ventilatoren eingesetzt, da für die Überwachung maßgebend der geförderte Volumenstrom ist und dadurch insgesamt die Überwachung einfach gehalten werden kann. In diesem Fall wird sowohl für die MDÜ als auch für die LWÜ ausschließlich die Drehzahl der Ventilatoren bei der LWÜ unter Berücksichtigung von bekannten Kennlinien ausgewertet.

Bei Lüftungsanlagen sind üblicherweise Wärmetauscher vorgesehen, mittels derer die Abluft (Fortluft) die von außen zugeführte Zuluft erwärmt bzw. umgekehrt Wärmeenergie aus der Abluft gewonnen wird. Im Winter besteht hierbei das Problem, dass der Wärmetauscher vereist. Es sind daher regelmäßige Abtauvorgänge erforderlich. Bei herkömmlichen Lüftungsanlagen wird dies dadurch erreicht, dass der Zuluftstrom für eine gewisse Zeit unterbrochen wird, der Wärmetauscher lediglich von der warmen Abluft durchströmt wird. Bei der hier beschriebenen Lüftungsanlage mit der Kontrolle des Luftdrucks ist in bevorzugter Ausgestaltung vorgesehen, dass für den Enteisungsbetrieb ein Bypass vorgesehen ist, über den die Zuluft auch im Enteisungsbetrieb geführt wird, um sicherzustellen, dass auch im Enteisungsbetrieb kein Unterdruck im Raum entsteht.

Eine weitere mögliche Fehlerquelle für eine Fehlfunktion ist in der Steuerelektronik selbst zu sehen. Um auch diese zuverlässig zu erkennen und Gegenmaßnahmen ergreifen zu können, ist in zweckdienlicher Ausgestaltung vorgesehen, dass die Steuereinrichtung zwei voneinander unabhängige Steuereinheiten umfasst nämlich eine Hauptsteuereinheit und eine Sicherheitseinheit, die voneinander unabhängig die Ventilatoren im Hinblick auf eine Fehlfunktion überwachen. Ergänzend ist vorzugsweise vorgesehen, dass die Steuereinheiten sich wechselseitig im Hinblick auf eine ordnungsgemäße Funktionsfähigkeit überwachen.

Die eigentliche Ansteuerung der Ventilatoren und Steuerung der gesamten Be- und Entlüftungsanlage wird dabei vorzugsweise ausschließlich über die Hauptsteuereinheit vorgenommen. Die Sicherheitssteuereinheit überwacht demgegenüber lediglich in redundanter Weise die beiden Ventilatoren im Hinblick auf eventuell unzulässige Zustände, die zu einem Unterdruck im Raum führen könnten. Bei Erfassung eines derartigen unzulässigen Zustands ist die Sicherheitssteuereinheit derart ausgebildet, dass sie selbsttätig auf die Ventilatoren steuernd eingreifen, diese zumindest abschalten kann.

Durch die Anordnung der redundanten Sicherheitssteuereinheit werden zwar unwahrscheinliche aber prinzipiell denkbare Störfälle, insbesondere Ausfälle der Hauptsteuereinheit abgedeckt. Um eine möglichst unabhängige Funktion der Sicherheitssteüereinheit von der Hauptsteuereinheit zu gewährleisten, sind insbesondere Maßnahmen gemäß Anspruch 12, bevorzugt in Kombination vorgesehen. Diese Maßnahmen sind die Anordnung einer von der Hauptsteuereinheit unabhängige Spannungsversorgung für die Sicherheitssteuereinheit (eigener Spannungsregler), ein von der Hauptsteuereinheit verschiedener Mikrocontroller (verschiedener Typ, verschiedene Hersteller ....) sowie eine zum Mikrocontroller unterschiedliche Software/Firmware, insbesondere für die überwachungsrelevanten Funktionen. Weiterhin ist vorgesehen, dass die Hauptsteuereinheit keine Zugriffsmöglichkeit auf die Sicherheitssteuereinheit hat und die beiden Einheiten bevorzugt lediglich über eine unidirektionale Schnittstelle miteinander verbunden sind.

Um im Falle einer Fehlfunktion ein zuverlässiges Abschalten zu gewährleisten, ist in zweckdienlicher Weiterbildung neben dem normalen Abschaltweg über die Hauptsteuereinheit ein unabhängiger zweiter Abschaltweg vorgesehen, welcher über die Sicherheitssteuereinheit aktivierbar ist. Insbesondere ist dem Ventilator ein zusätzlicher Sicherheitsschalter, insbesondere Relais, zugeordnet, der die Stromversorgung des Ventilators unterbricht. Dieser Schalter ist direkt und vorzugsweise ausschließlich von der Sicherheitssteuereinheit aktivierbar.

Insbesondere durch die Kombination der MDÜ mit der LWÜ ist eine zuverlässige Kontrolle und Überwachung bei nahezu allen denkbaren Störfällen gewährleistet. Insbesondere wird durch die Kombination dieser Überwachungsfunktionen in vorteilhafter Weise als Fehlfunktion ein Erhöhen der Drehzahl des abluftseitigen Ventilators, der nicht von der ordnungsgemäß arbeitenden Steuereinrichtung veranlasst ist, erkannt. Ursache hierfür ist beispielsweise ein Kurzschluss eines Steuersignals, was dazu führt, dass der Ventilator seine maximale Drehzahl einnimmt. Eine weitere Ursache ist ein Elektronikfehler in der Hauptsteuereinheit, insbesondere Softwarefehler, welcher zu einer nicht vorgesehenen Erhöhung der Drehzahl führt. Letzterer wird durch die redundante Überwachung durch die Sicherheitssteuereinheit erkannt. Diese Fehlfunktion stellt insoweit keine ordnungsgemäß arbeitende Steuereinrichtung dar. Als weitere Fehlfunktion wird auch ein zu geringer Zuluftstrom aufgrund eines unzulässigen Luftwiderstands erkannt, was seine Ursache beispielsweise in einer verstopften Zuleitung (Erhöhung des Luftwiderstandswerts) oder in einem gebrochenen Lüfterrad (Erniedrigung) hat. Diese Fehlfunktionen werden von der LWÜ sicher und zuverlässig erkannt. Darüber hinaus wird eine Vielzahl weiterer Fehlfunktionen sicher und zuverlässig erkannt. Die vorbeschriebenen Fehlfunktionen sind besonders relevant, da diese zu einem Unterdruck im Raum führen können.

Zusammenfassend zeichnet sich die Erfindung dadurch aus, dass allein aufgrund steuerungstechnischer Maßnahmen innerhalb der Steuereinrichtung für die kontrollierte Be- und Entlüftungsanlage zuverlässig das Auftreten eines Unterdrucks im Raum vermieden wird und keine zusätzlichen Geräte, wie Luftdruckwächter etc. erforderlich sind. Dies wird durch eine mehrstufige Überwachung, nämlich der MDÜ und der LWÜ, gewährleistet. Derartige zusätzliche Geräte sind typischerweise mit Installationskosten in Höhe von 1.000,-- € verbunden und müssen zudem üblicherweise zumindest einmal jährlich von einem Fachmann auf ihre Funktionsfähigkeit hin überprüft werden.

Ergänzend ist, um eine möglichst weitgehende Unabhängigkeit von der eigentlichen Hauptsteuerung der Be- und Entlüftungsanlage zu haben, die Sicherheitssteuereinheit implementiert, die die Überwachung ausführt und bei Erfassung eines unzulässigen Zustands zu einem Abschalten insbesondere über das Sicherheitsrelais führt. Schließlich ist weiterhin zweckdienlicherweise vorgesehen, dass die Sicherheitssteuereinheit unabhängig von der Hauptsteuereinheit ist, so dass nicht aufgrund von logischen Fehlern, beispielsweise im Rahmen der Programmierung etc. der gleiche Fehler bei beiden Steuereinheiten vorhanden ist.

Insgesamt ist hierdurch ein besonders sicherer und zuverlässiger Betrieb einer kontrollierten Be- und Entlüftungsanlage bei einem Raum mit einer offenen Feuerstätte erreicht. Derartige Konzepte bieten sich insbesondere für so genannte Passivhäuser an, die aufgrund ihrer sehr guten Isolierung nur einen geringen natürlichen Luftaustausch durch Leckagen zeigen und bei denen üblicherweise eine kontrollierte Be- und Entlüftung eingebaut ist.

Ein Ausführungsbeispiel der Erfindung wird nachfolgend anhand der Figuren näher erläutert. Darin zeigen in vereinfachten Darstellungen:
- Fig. 1: eine Blockbild-Darstellung einer Lüftungsanlage und
- Fig. 2: eine Blockbild-Darstellung zur Erläuterung der Steuerung und Überwachung eines Ventilators der Lüftungsanlage.

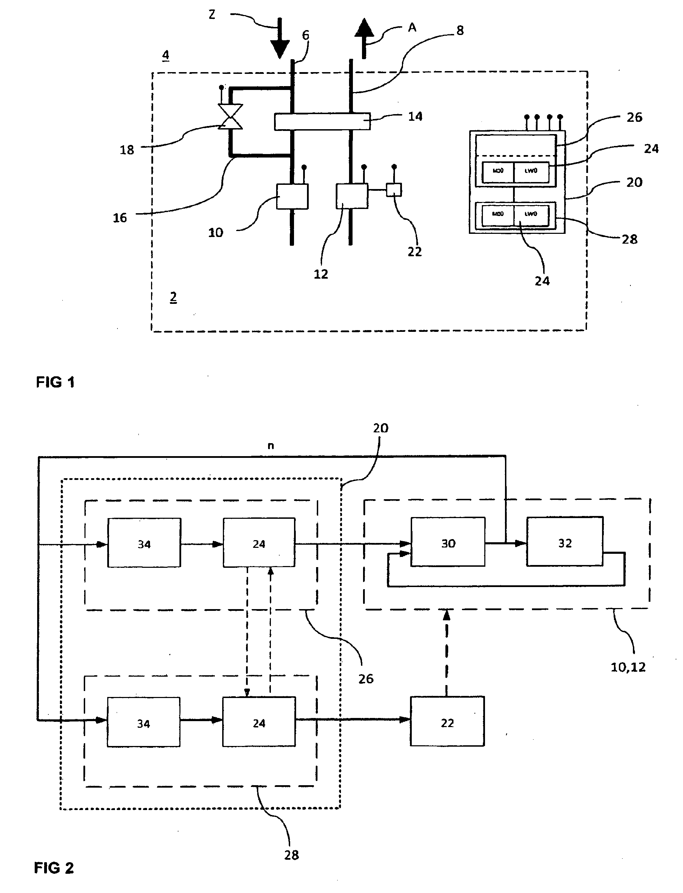

Bei einer Lüftungsanlage, wie sie grob vereinfacht in Fig. 1 dargestellt ist, wird ein hier gestrichelt dargestellter Raum 2, insbesondere Wohnraum, über einen Zuluftstrom Z mit Frischluft versorgt. Verbrauchte Ab- oder Fortluft wird als Abluftstrom A wieder in die Umgebung 4 abgeblasen. Innerhalb des Raums 2 erfolgt eine hier nicht näher dargestellte Verteilung der Frischluft in gewünschter Weise. Die Lüftungsanlage umfasst einen Zuluftkanal 6 sowie einen Abluftkanal 8, in die jeweils ein zuluftseitiger Ventilator 10 (Belüfter) bzw. ein abluftseitiger Ventilator 12 (Entlüfter) geschalten sind.

In modernen Belüftungsanlagen ist zur Wärmerückgewinnung aus dem Abluftstrom A üblicherweise ein Wärmetauscher 14 angeordnet, über den die beiden Luftströme Z, A zu Wärmetauschzwecken geführt werden. Bei der in Fig. 1 dargestellten Belüftungsanlage ist am Zuluftkanal 6 ein Bypass 16 mit einem absperrbaren Ventil 18 vorgesehen.

Die Ventilatoren 10, 12 sowie die gesamte Lüftungsanlage wird mit Hilfe einer Steuereinrichtung 20 gesteuert. Diese steht - wie schematisch angedeutet - mit den Ventilatoren 10, 12, mit dem Ventil 18 sowie mit einem zusätzlichen Schaltrelais 22, das dem abluftseitigen Ventilator 12 zugeordnet ist, über Steuerleitungen in Verbindung. Das Schaltrelais 22 stellt einen zusätzlichen zweiten Abschaltpfad zum Abschalten des Ventilators 12 dar. Grundsätzlich kann jeder Ventilator 10, 12 mit Hilfe eines integrierten Schalters in unterschiedlichen Leistungsstufen betrieben oder abgeschaltet werden. Das Schaltrelais 22 dient als zusätzlicher Sicherheitsschalter, welcher die Stromversorgung unterbricht.

Insbesondere in Fällen, bei denen im Raum 2 eine Feuerstätte vorgesehen ist, muss aus Sicherheitsgründen eine ausreichende Frischluftversorgung vorgesehen sein um die Entstehung eines Unterdrucks im Raum 2 beim Betrieb der Feuerstätte zu vermeiden. Um dies zu erreichen, steuert die Steuereinrichtung 22 die Ventilatoren 10, 12 in geeigneter Weise an. Die Steuergröße ist hierbei üblicherweise die Drehzahl der Ventilatoren 10, 12. Üblicherweise wird als Steuersignal eine Steuerspannung an die jeweiligen Ventilatoren 10, 12 übermittelt, die im Bereich von einigen Volt (1,8 - 10V) liegt. Die Drehzahl ist hierbei direkt proportional von der Steuerspannung abhängig. Bei Normalbedingungen ist über die Drehzahl zugleich ein definierter Luftstrom vorgegeben. Ausgehend von dieser für den ungestörten Normalbetrieb vereinfachenden Annahme ist der Steuereinrichtung 20 eine Ansteuerlogik hinterlegt, die gewährleistet, dass der Zuluftstrom Z größergleich dem Abluftstrom A ist. So werden beispielsweise Schaltstufenkombinationen der Ventilatoren 10, 12 ausgeschlossen, die dazu führen würden, dass der abluftseitige Ventilator 12 einen größeren Luftstrom fördern würde als der zuluftseitige Ventilator 10. Die Ventilatoren 10, 12 werden üblicherweise in mehreren Schaltstufen betrieben.

Ein wesentlicher Aspekt der Steuereinrichtung 20 ist darin zu sehen, dass ergänzend zu dieser kontrollierten Ansteuerung der Ventilatoren 10, 12 diese unter Auswertung von ventilator-spezifischen Kenndaten im Hinblick auf eine ordnungsgemäße Funktion überwacht werden. Im Rahmen dieser Überwachung wird allgemein überwacht, ob der Zuluftstrom Z tatsächlich größergleich dem Abluftstrom A ist. Wird festgestellt, dass dies nicht mehr der Fall ist, so werden entsprechende Steuermaßnahmen veranlasst, um die Sollvorgabe wieder zu erreichen, beispielsweise wird entweder die Leistung (Drehzahl) des zuluftseitigen Ventilators 10 erhöht und / oder die des abluftseitigen Ventilators 12 verringert. Sofern diese Maßnahmen nicht ausreichen, wird dies als eine (schwerwiegende) Fehlfunktion erkannt, was zu einem zwangsweisen Abschalten der Lüftungsanlage, zumindest des abluftseitigen Ventilators 12 führt.

Für die Überwachung ist in der Steuereinrichtung 20 eine Überwachungseinheit 24 implementiert, welche im Ausführungsbeispiel jeweils zur Ausführung zweier Überwachungsfunktionen ausgebildet ist. Die erste Überwachungsfunktion ist hierbei die sogenannte modellbasierende Drucküberwachung MDÜ und die zweite Überwachungsfunktion ist die sogenannte Luftwiderstandsüberwachung LWÜ. Aus Sicherheitsgründen ist die Überwachungseinheit 24 redundant ausgeführt, wobei hierfür im Ausführungsbeispiel eine Hauptsteuereinheit 26 sowie eine Sicherheitssteuereinheit 28 vorgesehen sind. Die Sicherheitssteuereinheit 28 dient vorzugsweise ausschließlich der Überwachung der Ventilatoren 10, 12 und kann bei einer erkannten Fehlfunktion zwangsweise über das Schaltrelais 22 den abluftseitigen Ventilator 12 abschalten. Die Hauptsteuereinheit 26 übernimmt demgegenüber zusätzlich noch weitere Aufgaben der normalen Steuerung der Lüftungsanlage.

Sowohl für die MDÜ als auch für die LWÜ wird die Motordrehzahl n des jeweiligen elektrischen Antriebsmotors des jeweiligen Ventilators 10, 12 überwacht. Hierzu ist vorzugsweise ein Drehzahlsensor, insbesondere ein Hall-Sensor vorgesehen, der ein Sensorsignal an die Steuereinrichtung 20 übermittelt. Alle für die Überwachung relevanten Daten werden parallel sowohl der Hauptsteuereinheit 26 als auch der Sicherheitssteuereinheit 28 zur weitergehenden Auswertung zur Verfügung gestellt.

Im Rahmen der MDÜ wird zunächst in vereinfachter Weise davon ausgegangen, dass der von den Ventilatoren 10, 12 geförderte Luftstrom Z, A direkt proportional zu der Drehzahl ist. Durch Auswertung und Vergleich der Drehzahl der beiden Ventilatoren wird daher im Rahmen der MDÜ sichergestellt, dass der Zuluftstrom Z größergleich dem Abluftstrom A ist. Aufgrund dieses vereinfachten Modells ist eine sehr einfache und leicht nachvollziehbare Überwachungsroutine geschaffen, die für den Normalfall ohne Störungen eine sichere Belüftung gewährleistet.

Zur Erhöhung der Sicherheit ist ergänzend die LWÜ vorgesehen. Hierbei wird davon ausgegangen, dass das der MDÜ zugrundeliegende vereinfachte Modell, wonach der geförderte Luftstrom Z, A proportional zur Drehzahl ist, bei Störungen nicht mehr ausreichend zutreffend ist. Derartige Störungen sind beispielsweise Verstopfungen im Zuluftkanal 6 oder Abluftkanal 8, die zu einer Erhöhung des Luftwiderstands oder Strömungswiderstands führen. Daneben können auch Defekte am Ventilator 10, 12 selbst eine derartige Störung darstellen, beispielsweise ein Bruch des Lüfterrads, so dass die geförderte Luftmenge kleiner als erwartet oder sogar 0 ist. Derartige Störungen werden über die LWÜ erfasst. Hierzu werden neben der Drehzahl ergänzende Kenndaten des Ventilators ausgewertet.

Generell werden für die Lüftungsanlage vorzugsweise volumenstromgeregelte Ventilatoren 10, 12 eingesetzt. Diese regeln aufgrund einer internen Regelstrecke selbsttätig den Luftstrom Z, A auf die von der Steuereinrichtung 22 vorgegebene Soll-Vorgabe. Dies führt dazu, dass bei einer Erhöhung des Luftwiderstands die Regelung des Ventilators 10, 12 automatisch zu einer Erhöhung der Drehzahl führt. Aus diesen Daten, nämlich Soll-Vorgabe und tatsächlich über die Regelung eingestellte Drehzahl lassen sich Rückschlüsse auf den aktuellen Luftwiderstand ziehen. Vorzugsweise sind hierzu Kennlinienfelder der Ventilatoren 10, 12 in der Steuereinrichtung 22 hinterlegt, so dass aus diesen Luftwiderstandwerte in Abhängigkeit der einzelnen Betriebszustände abgelesen werden können. Bei volumenstromgeregelten Ventilatoren 10, 12 wird daher insbesondere das Verhältnis zwischen dem Sollvolumenstrom und der Drehzahl überwacht. Das Kennlinienfeld oder in einfacher Ausführung eine Kennlinie ist beispielsweise vom Ventilatorhersteller vorgegeben und damit bekannt, wird auf einem Prüfstand ermittelt oder wird erst bei einem insbesondere automatischen Test bei der Inbetriebnahme der Lüftungsanlage ermittelt. Aufgrund des Verhaltes des volumenstromgeregelten Ventilators 10, 12 kann daher beispielsweise erkannt werden, ob sich der Luftwiderstand in unzulässiger Weise erhöht (Verstopfung) oder auch erniedrigt (Lüfterradbruch) hat. Bei einer Erhöhung des Luftwiderstands versucht die Steuereinrichtung 22 zunächst die Leistung der Ventilatoren 10, 12 in geeigneter Weise anzupassen um den Zuluftstrom Z größer als den Abluftstrom A zu halten. Sofern dies nicht (mehr) möglich ist, wird dies als eine schwerwiegende Fehlfunktion angesehen, was zum Abschalten führt.

Bei einfachen, nicht volumenstromgeregelten Ventilatoren 10, 12 führen unterschiedliche Luftwiderstandswerte zu einer unterschiedlichen, variierten Leistungsaufnahme des Elektromotors. Diese wird für die LWÜ herangezogen und ausgewertet. Auch hier sind vorzugsweise Kennlinienfelder hinterlegt, aus denen der Luftwiderstand bei vorgegebener Drehzahl und Leistungsaufnahme zu entnehmen ist.

Eine weitere, dritte Sicherheitsstufe ist schließlich in der redundanten Ausführung der Überwachungseinheit 24 zu sehen. Die Ventilatoren 10, 12 werden parallel und redundant sowohl von der Hauptsteuereinrichtung 26 als auch von der Sicherheitssteuereinheit 28 überprüft. Damit wird auch ein Ausfall oder eine Fehlfunktion der Hauptsteuereinrichtung 26 aufgefangen. Erkennt die Sicherheitssteuereinheit 28 eine Fehlfunktion, so steuert sie aktiv das Schaltrelais 22 an, um den abluftseitigen Ventilator 12 abzuschalten, gegebenenfalls auch die gesamte Lüftungsanlage. Die Sicherheitssteuereinrichtung 28 ist hierbei unbeeinflusst von der Hauptsteuereinrichtung 26, das heißt, diese kann nicht steuernd auf die Sicherheitssteuereinheit 28 einwirken. Es erfolgt allenfalls ein Datenaustausch bzw. eine Datenübermittlung.

Um zusätzlich einen parallelen Ausfall oder eine parallele Fehlfunktion beider Steuereinheiten 26, 28 zu vermeiden, unterscheiden diese sich vorzugsweise im Hinblick auf ihren Aufbau, um systembedingte Fehler zu vermeiden. Dieser Unterschied bezieht sich sowohl auf die Hardware als auch auf die verwendete Software. Die Sicherheitssteuereinrichtung 28 zeichnet sich im Vergleich zu der Hauptsteuereinheit 26 insbesondere durch folgende sicherheitstechnische Maßnahmen aus:
- Der Sicherheitssteuereinrichtung 28 hat direkten Zugriff auf die Ventilatoren 10, 12, hierauf hat die Hauptsteuereinrichtung 26 keinen Einfluss. Insbesondere ist ein zusätzlicher Abschaltpfad, beispielsweise über das Schaltrelais 22 vorgesehen.
- Die Sicherheitssteuereinrichtung 28 weist eine von der Hauptsteuereinrichtung 26 unabhängige Spannungsversorgung insbesondere durch einen eigenen Spannungsregler auf.
- Weiterhin sind unterschiedliche Mikro-Controller verwendet (unterschiedlicher Typ, unterschiedlicher Hersteller).
- Es werden verschiedene Software / Firmware eingesetzt sowie ein unterschiedlicher Übersetzer / Compiler bzw. es wird auf diesen verzichtet.

Die Funktionsweise der Überwachung mit Hilfe der Steuereinrichtung 20 wird nachfolgend ergänzend nochmals im Zusammenhang mit Fig. 2 näher erläutert, wobei hier der Einfachheit halber lediglich ein Ventilator 10, 12 dargestellt ist, insbesondere der abluftseitige Ventilator 12:
Bei dem Ventilator 10, 12 handelt es sich um einen volumenstromgeregelten Ventilator, der mit Hilfe eines Volumenstromreglers 30 und einer entsprechenden Regelstrecke 32 die Drehzahl n des Elektromotors des Ventilators 10, 12 derart regelt, dass ein konstanter Luftvolumenstrom aufrechterhalten wird. Die Drehzahl n wird an die Steuereinrichtung 20 übermittelt und zwar parallel an die Hauptsteuereinrichtung 26 sowie an die Sicherheitssteuereinrichtung 28. In beiden erfolgt mit Hilfe einer Erfassungseinheit 34 eine Drehzahlerfassung, die anschließend der Überwachungseinheit 24 (MDÜ und LWÜ) zur Verfügung gestellt wird. Die Überwachungseinheit 24 der Hauptsteuereinrichtung 26 macht bei Bedarf Vorgaben für den Ventilator 10, 12, beispielsweise wenn ein erhöhter Luftwiderstand auf der Zuluftseite erfasst wird. Im Ausführungsbeispiel ist vorgesehen, dass derartige Steuereingriffe ausschließlich von der Hauptsteuereinrichtung 26 vorgenommen werden. Die Sicherheitssteuereinrichtung 28 ist möglichst einfach gehalten und greift in diesem Fall nicht steuernd auf die Ventilatoren 10, 12 ein. Auch in der Sicherheitssteuereinrichtung 28 ist eine Erfassungseinheit 34 sowie die Überwachungseinheit 24 enthalten. Erkennt die Überwachungseinheit 24 eine (schwerwiegende) Fehlfunktion, so übermittelt sie über einen sogenannten zweiten Abschaltpfad ein Schaltsignal an das Schaltrelais 22, welches zum Abschalten des Ventilators 10, 12 dessen Stromversorgung unterbricht.

### Bezugszeichenliste

- 2: Raum
- 4: Umgebung
- 6: Zuluftkanal
- 8: Abluftkanal
- 10: zuluftseitiger Ventilator
- 12: abluftseitiger Ventilator
- 14: Wärmetauscher
- 16: Bypass
- 18: absperrbares Ventil
- 20: Steuereinrichtung
- 22: Sicherheitsschalter
- 24: Überwachungseinheit
- 26: Hauptsteuereinheit
- 28: Sicherheitssteuereinheit
- 30: Volumenstromregler
- 32: Regelstrecke
- 34: Erfassungseinheit

- A: Abluftstrom
- Z: Zuluftstrom
- n: Drehzahl

- MDÜ: Überwachungsfunktion
- LWÜ: Luftwiderstandsüberwachung

## Patentansprüche

1. Verfahren zur Kontrolle des Luftdrucks in einem Raum (2) insbesondere mit einer Feuerstätte, wobei eine Lüftungsanlage zum Be- und Entlüften des Raums vorgesehen ist mit einem zuluftseitigen Ventilator (10) sowie mit einem abluftseitigen Ventilator (12) und die Ventilatoren (10,12) über eine Steuereinrichtung (20) derart angesteuert werden, dass der dem Raum (2) über den zuluftseitigen Ventilator (10) zugeführte Zuluftstrom (Z) größergleich dem über den abluftseitigen Ventilator (12) abgeführten Abluftstrom (A) ist, **dadurch gekennzeichnet, dass** in der Steuereinrichtung (20) eine Überwachungseinheit (24) implementiert ist, die anhand von Kenndaten der Ventilatoren (10,12) diese auf eine Fehlfunktion dahingehend überwacht, ob der Zuluftstrom (Z) größergleich dem Abluftstrom (A) ist und dass bei einer erkannten Fehlfunktion zumindest der abluftseitige Ventilator (12) abgeschaltet wird.

2. Verfahren nach einem der vorhergehenden Ansprüche,
bei dem als eine erste Überwachungsfunktion (MDÜ) die Drehzahl (n) der Ventilatoren überwacht wird und anhand der Drehzahl (n) auf den jeweils geförderten Luftstrom (Z,A) rückgeschlossen wird.

3. Verfahren nach einem der vorhergehenden Ansprüche,
bei dem der abluftseitige Ventilator (12) in Abhängigkeit des zuluftseitigen Ventilators (10) gesteuert wird.

4. Verfahren nach einem der vorhergehenden Ansprüche,
bei dem als eine zweite Überwachungsfunktion eine Luftwiderstandsüberwachung (LWÜ) vorgesehen ist, die überprüft, gegen welchen Luftwiderstand der jeweilige Ventilator (10,12) arbeiten muss.

5. Verfahren nach einem Anspruch 4,
bei dem für die Luftwiderstandsüberwachung (LWÜ) Kenndaten der Ventilatoren (10,12) ausgewertet werden.

6. Verfahren nach Anspruch 4 oder 5,
bei dem zur Bestimmung des Luftwiderstands die Drehzahl (n) des jeweiligen Ventilators (10,12) und bei Bedarf ergänzend seine Leistungsaufnahme herangezogen werden.

7. Verfahren nach einem der Ansprüche 4 bis 6,
bei dem bei einem veränderten Luftwiderstandswert bei einem der Ventilatoren (10,12) die Leistung des anderen Ventilators (12,10), insbesondere dessen Drehzahl (n) angepasst wird.

8. Verfahren nach einem der vorhergehenden Ansprüche,
bei dem als Ventilator (10,12) ein volumenstromgeregelter Ventilator eingesetzt ist.

9. Verfahren nach einem der vorhergehenden Ansprüche,
bei dem Zuluftstrom (Z) und der Abluftstrom (A) über einen gemeinsamen Wärmetauscher (14) geführt werden, wobei in einem Abtaumodus der Zuluftstrom (Z) über einen Bypass (16) am Wärmetauscher (14) vorbeigeführt wird.

10. Verfahren nach einem der vorhergehenden Ansprüche,
bei dem die Steuereinrichtung (20) zwei voneinander unabhängige Steuereinheiten umfasst, nämlich eine Hauptsteuereinheit (26) und eine Sicherheitssteuereinheit (28), wobei die Steuereinheiten (26,28) voneinander unabhängig die Ventilatoren (10,12) überwachen.

11. Verfahren nach Anspruch 10,
bei dem die Sicherheitssteuereinheit (28) wahlweise oder in Kombination
- redundant zur Hauptsteuereinheit (26) zur Abschaltung zumindest des abluftseitigen Ventilators (12) ausgebildet ist,
- eine von der Hauptsteuereinheit (26) unabhängige Spannungsversorgung aufweist,
- einen Mikrocontroller aufweist, der von dem Mikrocontroller der Hauptsteuereinheit (26) verschieden ist,
- eine im Vergleich zur Hauptsteuereinheit (26) unterschiedliche Software aufweist,
- mit der Hauptsteuereinheit (26) lediglich derart verbunden ist, dass die Hauptsteuereinheit (26) keinen Zugriff auf die Sicherheitssteuereinheit (28) hat.

12. Verfahren nach Anspruch 10 oder 11,
bei dem zumindest dem abluftseitigen Ventilator (12) ein zusätzlicher Sicherheitsschalter (22) zum Abschalten des Ventilators (12) zugeordnet ist, der über die Sicherheitssteuereinheit (28) schaltbar ist.

13. Verfahren nach einem der vorhergehenden Ansprüche,
bei dem als Fehlfunktionen durch die Überwachungseinheit (24) erkannt werden
- ein nicht von der ordnungsgemäß arbeitenden Steuereinrichtung (20) veranlasstes Erhöhen der Drehzahl (n) des abluftseitigen Ventilators (12) sowie
- ein zu geringer Zuluftstrom (Z) aufgrund eines unzulässigen Luftwiderstands.

14. Steuereinrichtung (20) für eine Lüftungsanlage zum Be- und Entlüften eines Raums (2) mit einem zuluftseitigen Ventilator (10) sowie mit einem abluftseitigen Ventilator (12), die zur Kontrolle des Luftdrucks im Raum (2) derart ausgebildet ist, dass die Ventilatoren (10,12) derart angesteuert werden, dass der dem Raum (2) über den zuluftseitigen Ventilator (10) zugeführte Zuluftstrom (Z) größergleich dem über den abluftseitigen Ventilator (12) abgeführten Abluftstrom (A) ist, **dadurch gekennzeichnet, dass** eine Überwachungseinheit (24) implementiert ist, die anhand von Kenndaten der Ventilatoren (10,12) diese auf eine Fehlfunktion dahingehend überwacht, ob der Zuluftstrom (Z) größergleich dem Abluftstrom (A) ist und dass bei einer erkannten Fehlfunktion zumindest der abluftseitige Ventilator (12) abgeschaltet wird.

## Claims

1. Method for controlling the air pressure in a room (2), in particular with a fireplace, a ventilation system for aerating and deaerating the room being provided, having a supply-air-side ventilator (10) and a discharge-air-side ventilator (12) and the ventilators (10, 12) being activated by a controlling device (20) in such a way that the supply air stream (Z) supplied to the room (2) through the supply-air-side ventilator (10) is greater than or equal to the discharge air stream (A) discharged through the discharge-air-side ventilator (12), **characterized in that** a monitoring unit (24) is implemented in the controlling device (20) and, on the basis of characteristic data of the ventilators (10, 12), monitors them for a malfunction by ascertaining whether the supply air stream (Z) is greater than or equal to the discharge air stream (A) and **in that**, if a malfunction is detected, at least the discharge-air-side ventilator (12) is switched off.

2. Method according to one of the preceding claims, in which the rotational speed (n) of the ventilators is monitored as a first monitoring function (MDÜ) and the respectively required air stream (Z, A) is deduced on the basis of the rotational speed (n).

3. Method according to one of the preceding claims, in which the discharge-air-side ventilator (12) is controlled in dependence on the supply-air-side ventilator (10).

4. Method according to one of the preceding claims, in which an air resistance monitoring (LWÜ), which checks the air resistance that the respective ventilator (10, 12) has to operate against, is provided as a second monitoring function.

5. Method according to Claim 4, in which characteristic data of the ventilators (10, 12) are evaluated for the air resistance monitoring (LWÜ).

6. Method according to Claim 4 or 5, in which the rotational speed (n) of the respective ventilator (10, 12), and if need be additionally its power consumption, is/are used for determining the air resistance.

7. Method according to one of Claims 4 to 6, in which, if there is a changed air resistance value for one of the ventilators (10, 12), the power of the other ventilator (12, 10), in particular the rotational speed (n) thereof, is adapted.

8. Method according to one of the preceding claims, in which a volumetric-flow-controlled ventilator is used as the ventilator (10, 12).

9. Method according to one of the preceding claims, in which the supply air stream (Z) and the discharge air stream (A) are passed over a common heat exchanger (14), the supply air stream (Z) being routed past the heat exchanger (14) via a bypass (16) in a defrosting mode of the supply air stream (Z).

10. Method according to one of the preceding claims, in which the controlling device (20) comprises two controlling units that are independent of one another, to be specific a main controlling unit (26) and a safety controlling unit (28), the controlling units (26, 28) monitoring the ventilators (10, 12) independently of one another.

11. Method according to Claim 10,
in which, alternatively or in combination, the safety controlling unit (28)
- is formed redundantly with respect to the main controlling unit (26) for switching off at least the discharge-air-side ventilator (12),
- has a voltage supply that is independent of the main controlling unit (26),
- has a microcontroller that is different from the microcontroller of the main controlling unit (26),
- has software that is different in comparison with the main controlling unit (26),
- is merely connected to the main controlling unit (26) in such a way that the main controlling unit (26) has no access to the safety controlling unit (28).

12. Method according to Claim 10 or 11, in which at least the discharge-air-side ventilator (12) is assigned an additional safety switch (22) for switching off the ventilator (12) that can be switched by means of the safety controlling unit (28).

13. Method according to one of the preceding claims,
in which the following are detected by the monitoring unit (24) as malfunctions
- an increase in the rotational speed (n) of the discharge-air-side ventilator (12) that is not initiated by the properly operating controlling device (20) and
- an insufficient supply air stream (Z) as a result of an inadmissible air resistance.

14. Controlling device (20) for a ventilation system for aerating and deaerating a room (2) having a supply-air-side ventilator (10) and a discharge-air-side ventilator (12), which is designed for controlling the air pressure in the room (2) such that the ventilators (10, 12) are activated in such a way that the supply air stream (Z) supplied to the room (2) through the supply-air-side ventilator (10) is greater than or equal to the discharge air stream (A) discharged through the discharge-air-side ventilator (12), **characterized in that** a monitoring unit (24) is implemented and, on the basis of characteristic data of the ventilators (10, 12), monitors them for a malfunction by ascertaining whether the supply air stream (Z) is greater than or equal to the discharge air stream (A) and **in that**, if a malfunction is detected, at least the discharge-air-side ventilator (12) is switched off.

## Revendications

1. Procédé de contrôle de la pression d'air dans un espace (2), comprenant notamment un foyer, une installation de ventilation étant prévue pour l'aération et l'extraction d'air de l'espace, laquelle comprend un ventilateur côté arrivée d'air (10) ainsi qu'un ventilateur côté évacuation d'air (12) et les ventilateurs (10, 12) étant commandés par le biais d'un dispositif de commande (20) de telle sorte que le courant d'arrivée d'air (Z) acheminé à l'espace (2) par le biais du ventilateur côté arrivée d'air (10) est supérieur ou égal au courant d'évacuation d'air (A) évacué par le biais du ventilateur côté évacuation d'air (12), **caractérisé en ce qu'**une unité de surveillance (24) est mise en oeuvre dans le dispositif de commande (20), laquelle surveille les ventilateurs (10, 12) au moyen de caractéristiques de ceux-ci en vue d'un éventuel défaut de fonctionnement en vérifiant si le courant d'arrivée d'air (Z) est supérieur ou égal au courant d'évacuation d'air (A) et **en ce qu'**en cas de défaut de fonctionnement identifié, au moins le ventilateur côté évacuation d'air (12) est déconnecté.

2. Procédé selon la revendication précédente, selon lequel une première fonction de surveillance (MDÜ) consiste à surveiller la vitesse de rotation (n) des ventilateurs et à déduire le courant d'air (Z, A) respectivement transporté au moyen de la vitesse de rotation (n).

3. Procédé selon l'une des revendications précédentes, selon lequel le ventilateur côté évacuation d'air (12) est commandé en fonction du ventilateur côté arrivée d'air (10).

4. Procédé selon l'une des revendications précédentes, selon lequel une deuxième fonction de surveillance prévue est une surveillance de la résistance de l'air (LWÜ), laquelle vérifie contre quelle résistance de l'air doit travailler le ventilateur (10, 12) correspondant.

5. Procédé selon la revendication 4, selon lequel des caractéristiques des ventilateurs (10, 12) sont interprétées pour la surveillance de la résistance de l'air (LWÜ).

6. Procédé selon la revendication 4 ou 5, selon lequel la vitesse de rotation (n) du ventilateur (10, 12) correspondant et, si nécessaire en complément, sa puissance consommée, sont utilisées pour déterminer la résistance de l'air.

7. Procédé selon l'une des revendications 4 à 6, selon lequel, en présence d'une valeur modifiée de la résistance de l'air au niveau de l'un des ventilateurs (10, 12), la puissance de l'autre ventilateur (10, 12), notamment sa vitesse de rotation (n), est adaptée.

8. Procédé selon l'une des revendications précédentes, selon lequel un ventilateur à régulation du débit volumique est utilisé comme ventilateur (10, 12).

9. Procédé selon l'une des revendications précédentes, selon lequel le courant d'arrivée d'air (Z) et le courant d'évacuation d'air (A) passent par un échangeur de chaleur (14) commun, le courant d'arrivée d'air (Z), dans un mode de dégivrage, passant à côté de l'échangeur de chaleur (14) par un bipasse (16).

10. Procédé selon l'une des revendications précédentes, selon lequel le dispositif de commande (20) comprend deux unités de commande indépendantes l'une de l'autre, à savoir une unité de commande principale (26) et une unité de commande de sécurité (28), les unités de commande (26, 28) surveillant les ventilateurs (10, 12) indépendamment l'une de l'autre.

11. Procédé selon la revendication 10, selon lequel l'unité de commande de sécurité (28), facultativement ou en combinaison
- est configurée pour être redondante avec l'unité de commande principale (26) pour la déconnexion d'au moins le ventilateur côté évacuation d'air (12),
- présente une alimentation électrique indépendante de l'unité de commande principale (26),
- présente un microcontrôleur qui est différent du microcontrôleur de l'unité de commande principale (26),
- présente un logiciel différent de celui de l'unité de commande principale (26),
- est uniquement reliée avec l'unité de commande principale (26) de sorte que l'unité de commande principale (26) n'a aucun accès à l'unité de commande de sécurité (28).

12. Procédé selon la revendication 10 ou 11, selon lequel un commutateur de sécurité (22) supplémentaire destiné à déconnecter le ventilateur (12) est associé au moins au ventilateur côté évacuation d'air (12), lequel peut être commandé par le biais de l'unité de commande de sécurité (28).

13. Procédé selon l'une des revendications précédentes, selon lequel les défauts de fonctionnement identifiés par l'unité de surveillance (24) sont
- une augmentation de la vitesse de rotation (n) du ventilateur côté évacuation d'air (12) qui n'est pas demandée par le dispositif de commande (20) fonctionnant en toute conformité ainsi
- qu'un courant d'arrivée d'air (Z) trop faible en raison d'une résistance de l'air non admissible.

14. Dispositif de commande (20) pour une installation de ventilation pour l'aération et l'extraction d'air d'un espace (2), comprenant un ventilateur côté arrivée d'air (10) ainsi qu'un ventilateur côté évacuation d'air (12), lequel est configuré pour contrôler la pression d'air dans l'espace (2) de telle sorte que les ventilateurs (10, 12) sont commandés de telle sorte que le courant d'arrivée d'air (Z) acheminé à l'espace (2) par le biais du ventilateur côté arrivée d'air (10) est supérieur ou égal au courant d'évacuation d'air (A) évacué par le biais du ventilateur côté évacuation d'air (12), **caractérisé en ce qu'**une unité de surveillance (24) est mise en oeuvre, laquelle surveille les ventilateurs (10, 12) au moyen de caractéristiques de ceux-ci en vue d'un éventuel défaut de fonctionnement en vérifiant si le courant d'arrivée d'air (Z) est supérieur ou égal au courant d'évacuation d'air (A) et **en ce qu'**en cas de défaut de fonctionnement identifié, au moins le ventilateur côté évacuation d'air (12) est déconnecté.
